# EUROPEAN PATENT SPECIFICATION

(11) **EP 2 826 440 B1**
(45) Date of publication and mention of the grant of the patent: **06.09.2017**
(21) Application number: 14176924.0
(22) Date of filing: 14.07.2014
(51) Int. Cl.: A61C 13/16

(54) **Dental flask**
Dentalmuffel
Moufle dentaire

(30) Priority: 16.07.2013 IT RM20130421
(43) Date of publication of application: 21.01.2015
(73) Proprietor: Guerra, Gianfranco, 83014 Ospedaletto d'Alpinolo (AV) (IT)
(72) Inventor: Guerra, Gianfranco, 83014 Ospedaletto d'Alpinolo (AV) (IT)
(74) Representative: Romano, Giuseppe

(56) References cited:
- WO-A1-95/27447
- GB-A- 245 788
- JP-A- 2008 006 271
- US-A- 2 260 909

## Description

The present invention relates to a dental flask comprising a cavity apt to receive a three-dimensional reproduction of a dental cast characterizing in that it comprises means for locking the three-dimensional reproduction inside the cavity.

Dental flasks are devices which, as described in the state of art, are used for developing dental prostheses, such as for example prostheses of flexible type.

The manufacturing of prostheses in practical terms is performed by the dental technician by means of methods providing a series of operative passages involving indeed the use of dental flasks. In particular, the operations which usually are performed for manufacturing the prostheses provide as first passage the fact of obtaining a cast of the patient's dental arches therefrom then the three-dimensional model, made of plaster of the arches themselves is developed.

The model made of plaster is subsequently positioned in a dental flask and immobilized therein by means of using liquid plaster. The solidification of the plaster which, in reality, surrounds the model existing in the flask, allows locking and stabilizing the dental model in the device depending upon the subsequent passages aiming at the real manufacturing of the prosthesis. In particular, as it is known to the person skilled in the art, the injection in the flask of plastic materials suitable to be used for the dental prostheses falls among the operative processes performed after the plaster solidification.

From the operative point of view, the passage of locking the model in the flask requires, as shown above, the use of plaster in quantities varying mainly from about 200 to 300 grams for each prosthesis to be manufactured and long time, more or less, for the solidification of the plaster itself. Furthermore, as it is known to the person skilled in the art, the method even provides a passage of flasking needed for recovering the prosthesis which has been manufactured from the flask. In particular, the flasking consists in extracting the dental prosthesis from a flask which, due to the effect of the previous operative passages, is actually wholly filled-up with plaster. For this reason, the recovery of the dental prosthesis necessarily passes through the plaster rupture which, currently, is performed mechanically by using a hammer. The flasking then results to be a delicate passage since the plaster rupture, when it is performed not correctly, can determine damages to the just manufactured prosthesis.

In view of what described in the known state of art and what illustrated above, the methods for implementing dental prostheses using the current flasks have then a series of operative disadvantages.

In particular, several of these disadvantages are due to the use of plaster for stabilizing the three-dimensional model inside the flask. In fact, if one considers that an average dental laboratory develops about an average of 6 flasks per day and that for each flask an average of 250 grams of plaster is needed, it follows that the average used quantity of plaster is in reality an important quantity, in the order of about 30-33 Kg each month. Furthermore, the disposal of the used plaster is rather problematic since it is classified as "special waste" which has to be disposed of according to precise procedures and with high costs falling on the expenses for handling the dental laboratory. Moreover, the need of waiting for the plaster solidification has the disadvantage of requesting long time, more or less, with phases of not effectiveness of the technician and consequent time lengthening for manufacturing the dental prostheses. Furthermore, one of the main disadvantages associated to the used of known flasks is linked to the delicate flasking procedure which, consisting as already said in breaking the solidified plaster with a hammer, can determine a damage of the manufactured prosthesis.

The dental flask described in US2,260,909 A1 is a dental flask known in the art and comprising a cavity defined by side walls of said flask apt to receive a three-dimensional reproduction of a dental cast and to be filled with a polymerizable material, and locking means of said reproduction inside said cavity, wherein said locking means comprise three screw apt to engage a corresponding thread made through side walls of said flask so as to protrude inside said cavity of an adjustable.

An object of the present invention is to propose a new and original solution to the disadvantages existing in the known state of art.

A first object of the present description therefore is a dental flask as defined in independent claim 1.

A second object of the present description is a method for manufacturing dental prostheses using a dental flask as defined in independent claim 4. An additional object of the present description is a kit for manufacturing dental prostheses comprising at least a flask as defined in independent claim 5. Preferred features of the subject of the present description are reported in the depending claims.

In particular, the present description relates to a dental flask which, differently from the flasks described in the state of art, among its structural/constitutive components has means for locking a three-dimensional representation of one or both dental arches without the need of using plaster or however any material which is not structural part of the flask.

The flask subject of the present description allows then to manufacture prostheses, preferably prostheses of flexible type, without the need of using plaster, thus reducing the time for manufacturing the prostheses and even the risk of causing damages to the prosthesis during the flasking phase. In particular, such advantages are reached thanks to the fact that, structurally, the flask comprises locking means allowing to lock and stabilize the dental model in the flask.

The main advantage, as already said, consists in that for manufacturing dental prostheses it is no more necessary the use of plaster with consequent obtaining of prostheses in shorter time than those required with the use of known flasks. Furthermore, the problem related to the disposal as "special waste" of the used plaster is removed with the dental flasks described herein with consequent economic and environmental advantage.

For what said above, the invention subject of the present description then characterizes for the undoubted advantages with respect to the common dental flasks.

Additional advantages, as well as the features and use modes of the present invention, will result evident from the following detailed description related to its possible embodiments, shown by way of example and not for limitative purpose, by making reference to the figures of the enclosed drawings, wherein :
- figure 1 shows a perspective view of the outside of an embodiment of the flask according to the present invention;
- figure 2 represents a perspective view from the top of the inside of an embodiment of the flask according to the present invention,
- figure 3 represents a perspective view from the top of the inside of an embodiment of the flask according to the present invention,
- figure 4 represents a perspective front view of the inside of an embodiment of the flask according to the present invention.
- figure 5 represents a perspective view from the top of the inside of an embodiment of the flask according to the present invention.
Hereinafter in the description, the present invention will be described with reference to the above-mentioned figures.

The subject of the present description is then a dental flask 1.

The dental flasks, as even said above, are devices which can be used for manufacturing dental prostheses.

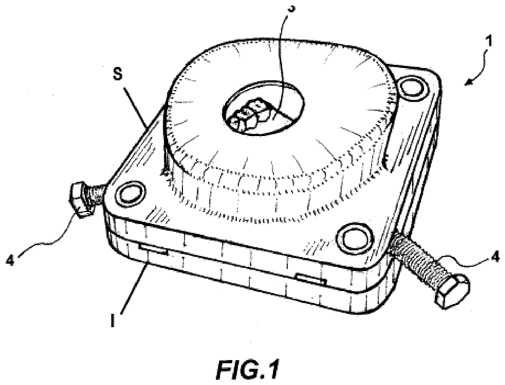

In particular, the flask 1 of the invention, analogously to the known flasks, comprises a cavity 2 apt to receive a three-dimensional reproduction of a dental cast 3. As shown in figure 1, the flask 1 comprises an upper portion S (acting as closing element) and a lower portion I able to cooperate there between in order to allow closing the flask itself, for example, during the phases of injecting the plastic material for manufacturing the dental prostheses. In an embodiment of the invention, the cavity 2 wherein the reproduction 3 is housed, is defined by the side walls of the lower portion I. Preferably, such side walls of the lower portion I are structurally continuous walls so that, during the phases of injecting the plastic material there is no discharge of the same from the flask itself. Under three-dimensional reproduction of a dental cast in the present description the three-dimensional model is meant, preferably made of plaster, of the arch or the dental arch which usually the dental technician develops starting from the casts of teeth and gingivae obtained by filling-up a "cast-bearing spoon", for example, with alginate and inserting the same in the mouth of the patient.

The flask 1 of the invention characterizes in that it comprises among its structural elements means 4 for locking the reproduction 3 inside the cavity 2.

As the flasks are widely known and routinely used by the dental technicians, it does not result to be necessary describing in details all structural elements defining the flask 1 of the invention since it could have the same structural features of the common flasks but it differs therefrom due to the presence of locking means 4 as described hereinafter.

In particular, the function of the locking means 4 consists in stabilizing and fixing the three-dimensional model 3 inside the cavity 2 so that it cannot move, shift inside the flask 1 during the subsequent phases aimed at manufacturing the prostheses.

In an embodiment of the present invention the locking means 4, as shown in figures 1-5, consists of only two screws 4 or only one screw 4, and respectively one or two contact surfaces 5. In particular, said only two screws 4 or only one screw 4 and said one or two contact surfaces 5 are apt to cooperate so as to achieve a locking seat for the reproduction 3 inside the cavity 2.

In other terms, then, the only two screws 4 or only one screw 4 and one or two contact surfaces 5 are present among the structural elements of the flask 1 and the function thereof is to create a housing for locking and stabilizing the three-dimensional model 3 inside the cavity 2. The number of screws 4 and the number of contact surfaces 5 existing in the flask 1 could vary to guarantee a suitable stabilization of the model 3 in the cavity 2 according to different operating needs, such as for example, different sizes of the three-dimensional manufacturing 3.

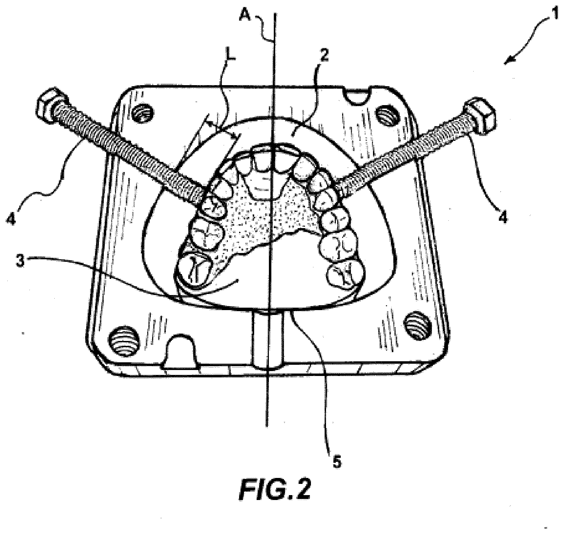

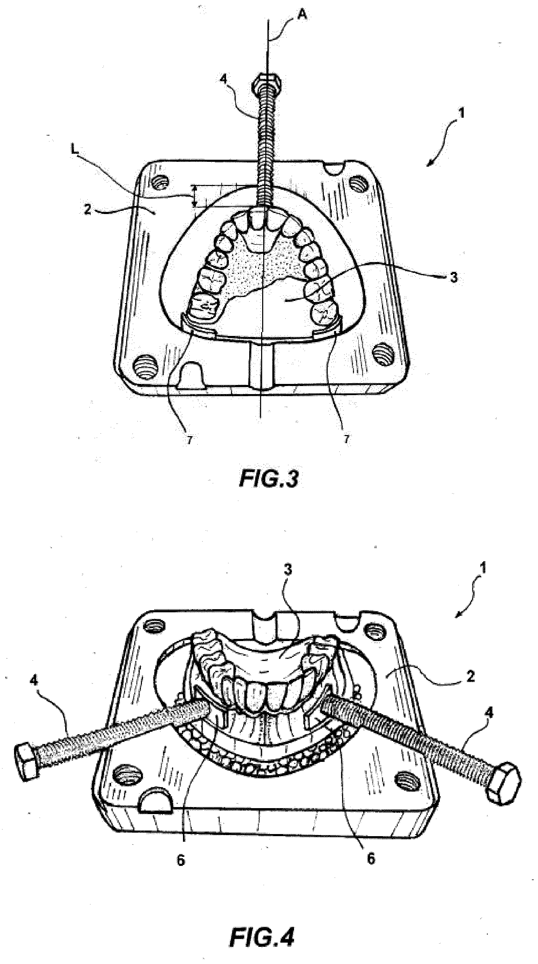

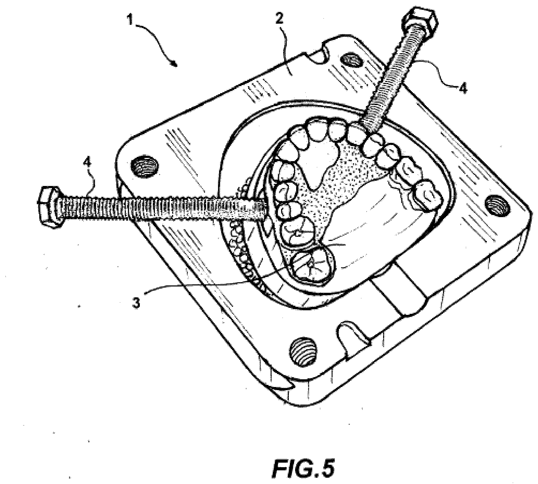

In particular, each screw 4 is a screw apt to engage a corresponding thread present in the flask 1. In particular, said at least a thread could be present in any point of the flask both in the portion comprising the cavity wherein the three-dimensional model is housed as well in the upper counterpart. As represented in figures 2-5, each screw can protrude inside the cavity 2 by a length L adjustable according to the operating needs. By purely way of example and not for limitative purpose, the length L will result to be longer or shorter according to the size of the three-dimensional representation 3 and it could further vary according to the different operative needs requested during the manufacturing of the prosthesis. Furthermore, the locking means 4 even comprise elements 6 for supporting said at least screw 4 to the reproduction 3. In this case each screw 4 then will be indirectly in contact with the three-dimensional model 3 by means of the element 6, as shown in figure 4 and 5.

Such support elements 6 can be designed in any material and shape considered suitable for the person skilled in the art to the above-described function. By way of example the support elements 6 can be nuts, plates, for example made of metal but not only this, having on one side a thread apt to receive the screw 4 and on the opposite side a preferably convex surface, suitable to contact firmly the three-dimensional model.

Under the term contact surface 5 in the present description a surface for stopping in this case the three-dimensional model 3 is meant. The surface 5 is substantially a peripheral surface of the cavity 2, as shown in figure 3. The person skilled in the art will be able, thanks to his/her average knowledge, to design the stopping means 7 based upon the function carried out thereby and indicated above.

In an embodiment of the flask 1, represented in figures 1, 2, 4 and 5, there are only two screws 4, as described above. In particular, as shown in figure 2 the two screws will be present each one on opposite sides with respect to a sagittal plane A of the flask 1. Furthermore, in this embodiment one single contact surface 5 for the reproduction 3 is provided, which can comprise or coincide with a wall of the cavity 2. In a particularly advantageous way, the two screws 4 and the contact surface are arranged in the flask 1 or however around said reproduction 3 in angularly equidistant way.

In this case then the seat for locking the reproduction 3 inside said cavity 2 is obtained thanks to the cooperation between said two screws 4 and one single contact surface 5. In another embodiment of the flask 1, represented in figure 3 there are two contact surfaces 5 and a screw 4 of the above-described type. In particular, as shown in figure 3 the two contact surfaces 5 will be present each one on opposite sides with respect to the sagittal plane A of the flask 1.

In particularly advantageous way, the two contact surfaces 5 and the screw 4 are arranged in the flask 1 or however around said reproduction 3 in angularly equidistant way. In particularly advantageous way the two screws 4 and the contact surface are arranged in the flask 1 or however around said reproduction 3 in angularly equidistant way.

In this embodiment, as already said, one single screw is provided 4 and therefore, the seat for locking the reproduction 3 inside said cavity 2 is obtained thanks to the cooperation between said two contact surfaces 5 and one single screw 4.

The above-described embodiments are exemplifying embodiments of the flask 1 of the invention and therefore it is to be meant that flasks 1 with only two or only one screws 4 and/or respectively one or two contact surfaces 5 different from the herein precisely defined one, fall within the requested protection scope.

The flask 1 preferably is a flask apt to be filled-up/used with a polymerizable material or is a flask used for manufacturing dental prostheses of flexible type. By purely way of example, the polymerizable material therewith the flask 1 could be filled-up/used is a thermoplastic material for dental use or thermoplastic material commonly used for manufacturing flexible prostheses, such as for example, dental resins.

The subject of the present invention is also a method for manufacturing dental prostheses using a dental flask 1. In particular, such method characterizes in that the passage of locking and stabilizing the three-dimensional model 3 of the dental arch inside the flask 1 takes place substantially by exploiting only two screws 4 or only one screw 4 and two or one contact surface 5 existing as structural elements of the flask 1. In other terms such method does not provide that the passage for locking and stabilizing the three-dimensional model 3 inside the flask 1 is performed by means of casting liquid plaster and hardening the plaster itself. Furthermore, a flasking passage by means of using a hammer or more generally tools suitable to the rupture of the plaster itself is neither provided. In the herein described method, in fact, the flasking takes place by simply slackening the two screws or one screw 4 which keep the three-dimensional model 3 locked and stabilized.

Additional object of the present invention is a kit for manufacturing dental prostheses comprising a flask 1 according to the invention and means suitable for manufacturing said prostheses. Such means, comprising at least one of the following: one or more aliquot parts of the thermoplastic material, latch for inserting the thermoplastic material in the flask itself, one or more aliquot parts of insulating silicone apt to cover the three-dimensional model before inserting the thermoplastic material, resin teeth. The present invention has been so far described with reference to preferred embodiments thereof. It is to be meant that other embodiments belonging to the same inventive core may exists, all within the protection scope of the here-below reported claims.

## Claims

1. A dental flask (1) comprising
- a cavity (2) defined by side walls of said flask (1) and apt to receive a three-dimensional reproduction of dental cast (3) and to be filled with a polymerizable material,
- locking means of said reproduction (3) inside said cavity;
**characterized in that** said locking means (4) comprise:
- only two screws apt to engage two corresponding threads of the flask (1) each made on opposite sides with respect to a sagittal plane (A) of said flask (1) and in such a manner as to both protrude inside said cavity (2) of an adjustable length, and
- a contact surface (5) for said reproduction (3) which is substantially a peripheral surface of said cavity (2);
or
- only one screw apt to engage a corresponding thread of the flask (1) in such a manner as to protrude inside said cavity (2) of an adjustable length, and
- two contact surfaces (5) for said reproduction (3), each made on opposite sides of a sagittal plane of said flask (1) and which are substantially a peripheral surface of said cavity (2), and
- support elements (6) of said two screws or said screw with said reproduction (3) wherein said two screws and said contact surface or said screw an said two contact surfaces are apt to cooperate so as to achieve a locking seat for said reproduction (3) inside said cavity (2).

2. The dental flask (1) according to claim 1, wherein said two screws and said contact surface or said screw and said two contact surfaces are angularly equidistant.

3. The dental flask (1) according to claim 1 or 2, wherein said polymerizable material is a thermoplastic material for dental use.

4. Method for manufacturing dental prostheses using a dental flask (1) according to any one of claims 1 to 3.

5. Kit for manufacturing dental prostheses comprising at least one dental flask (1) according to any one of claims 1 to 3 and means suitable for manufacturing said prostheses, wherein the means comprise at least one of the following: one or more aliquot parts of the thermoplastic material, latch for inserting the thermoplastic material in the flask itself, one or more aliquot parts of insulating silicone apt to cover the three-dimensional model before inserting the thermoplastic material, or resin teeth.

## Patentansprüche

1. Dentalmuffel (1), die umfasst:
- einen Hohlraum (2), der durch Seitenwände der Muffel (1) definiert wird und geeignet ist eine dreidimensionale Nachbildung eines Kiefermodells (3) zu empfangen und mit einem polymerisierbaren Material gefüllt zu werden,
- Verriegelungsmittel der Nachbildung (3) innerhalb des Hohlraums;
**dadurch gekennzeichnet, dass** das Verriegelungsmittel (4) umfasst:
- nur zwei Schrauben, die geeignet sind in zwei entsprechende Gewinde der Muffel (1) einzugreifen, wobei jedes auf gegenüberliegenden Seiten, bezüglich einer Sagittalebene (A) der Muffel (1), und so, dass sie beide mit einer einstellbaren Länge in den Hohlraum (2) hineinragen, vorgesehen wird und
- eine Kontaktfläche (5) für die Nachbildung (3), die im Wesentlichen eine periphere Oberfläche des Hohlraums (2) ist;
oder
- nur eine Schraube, die geeignet ist in ein entsprechendes Gewinde der Muffel (1) einzugreifen, so dass sie mit einer einstellbaren Länge in das Innere des Hohlraums (2) hineinragt, und
- zwei Kontaktflächen (5) für die Nachbildung (3), die jeweils auf entgegengesetzten Seiten einer Sagittalfläche der Muffel (1) vorgesehen werden und im Wesentlichen eine periphere Oberfläche des Hohlraums (2) sind,
und
- Stützelemente (6) der zwei Schrauben oder der Schraube mit der Nachbildung (3)
wobei die zwei Schrauben und die Kontaktfläche oder die Schraube und die zwei Kontaktflächen geeignet sind zu kooperieren, um so einen Verriegelungsplatz für die Nachbildung (3) im Inneren des Hohlraums (2) zu erhalten.

2. Dentalmuffel (1) gemäß Anspruch 1, wobei die zwei Schrauben und die Kontaktfläche oder die Schraube und die zwei Kontaktflächen winklig abstandsgleich sind.

3. Dentalmuffel (1) gemäß Anspruch 1 oder 2, wobei das polymerisierbare Material ein thermoplastisches Material zur dentalen Anwendung ist.

4. Verfahren zur Herstellung eines Zahnersatzes unter Verwendung einer Dentalmuffel (1) gemäß einem der Ansprüche 1 bis 3.

5. Kit zur Herstellung eines Zahnersatzes, das umfasst: mindestens eine Dentalmuffel (1) gemäß einem der Ansprüche 1 bis 3 und Mittel, die zum Herstellen der Prothese geeignet sind, wobei die Mittel umfassen: ein oder mehrere aliquote Teile des thermoplastischen Materials, eine Verriegelung zum Einsetzen des thermoplastischen Materials in eben der Muffel, ein oder mehrere aliquote Teile isolierenden Silikons, die geeignet sind das dreidimensionale Modell zu bedecken, bevor das thermoplastische Material eingesetzt wird, und/oder Kunststoffzähne.

## Revendications

1. Moufle dentaire (1) comprenant :
- une cavité (2) définie par des parois latérales dudit moufle (1) et apte à recevoir une reproduction en trois dimensions d'objet dentaire coulé (3) et à être remplie d'une matière polymérisable,
- des moyens de verrouillage de ladite reproduction (3) à l'intérieur de ladite cavité ;
**caractérisé en ce que** lesdits moyens de verrouillage (4) comprennent :
- seulement deux vis aptes à entrer en prise avec deux filets correspondants du moufle (1), formés tous deux sur des côtés opposés par rapport à un plan sagittal (A) dudit moufle (1), et de manière à ce qu'elles fassent saillie toutes deux à l'intérieur de ladite cavité (2), d'une longueur réglable, et
- une surface de contact (5) pour ladite reproduction (3), qui est sensiblement une surface périphérique de ladite cavité (2) ;
ou
- une seule vis apte à entrer en prise avec un filet correspondant du moufle (1), de manière à faire saillie à l'intérieur de ladite cavité (2), d'une longueur réglable, et
- deux surfaces de contact (5) pour ladite reproduction (3), qui sont formées toutes deux sur des côtés opposés d'un plan sagittal dudit moufle (1) et qui sont sensiblement une surface périphérique de ladite cavité (2), et
- des éléments de support (6) desdites deux vis ou de ladite vis avec ladite reproduction (3),
dans lequel lesdites deux vis et ladite surface de contact ou ladite vis et lesdites deux surfaces de contact sont aptes à coopérer de manière à obtenir une embase de verrouillage de ladite reproduction (3) à l'intérieur de ladite cavité (2).

2. Moufle dentaire (1) selon la revendication 1, dans lequel lesdites deux vis et ladite surface de contact ou ladite vis et lesdites deux surfaces de contact sont angulairement équidistantes.

3. Moufle dentaire (1) selon la revendication 1 ou 2, dans lequel ladite matière polymérisable est une matière thermoplastique à usage dentaire.

4. Procédé de fabrication de prothèses dentaires à l'aide d'un moufle dentaire (1) selon l'une quelconque des revendications 1 à 3.

5. Kit de fabrication de prothèses dentaires comprenant au moins un moufle dentaire (1) selon l'une quelconque des revendications 1 à 3, et des moyens appropriés pour fabriquer lesdites prothèses, dans laquelle les moyens comprennent au moins un élément de ce qui suit : une ou plusieurs partie(s) aliquote(s) de la matière thermoplastique, un verrou destiné à l'introduction de la matière thermoplastique dans le moufle lui-même, une ou plusieurs partie(s) aliquote(s) de silicone isolante apte à recouvrir le modèle en trois dimensions avant l'introduction de la matière thermoplastique, ou des dents en résine.
